# EUROPEAN PATENT APPLICATION

(11) **EP 4 534 926 A1**
(43) Date of publication of application: **09.04.2025**
(21) Application number: 24204920.3
(22) Date of filing: 07.10.2024
(51) Int. Cl.: F25B 5/02, F25B 13/00, F25B 41/20

(54) **HEAT EXCHANGE APPARATUS FOR ENERGY STORAGE, ENERGY STORAGE DEVICE, AND PHOTOVOLTAIC ENERGY STORAGE SYSTEM**

(30) Priority: 08.10.2023 CN 202311298889
(71) Applicant: Huawei Digital Power Technologies Co., Ltd., Shenzhen, Guangdong 518043 (CN)
(72) Inventor: LI, Malin, Shenzhen, 518043 (CN); PENG, Lijun, Shenzhen, 518043 (CN)
(74) Representative: Gill Jennings & Every LLP

(57) **Abstract**

A heat exchange apparatus for energy storage, an energy storage device, and a photovoltaic energy storage system are disclosed and relate to the field of energy. The heat exchange apparatus for energy storage includes a heat exchange module (100), an energy storage module (200), an air conditioning module (300), and a throttling module (400). The heat exchange module is configured to exchange heat with a load. The throttling module includes a first throttling port (401), a second throttling port (402), a third throttling port (403), and a fourth throttling port (403). A first control valve (405) and a second control valve (406) are disposed inside the throttling module. The first control valve separately communicates with the first throttling port and the second throttling port, and the second control valve separately communicates with the third throttling port and the fourth throttling port. The air conditioning module includes a first temperature adjustment port (301) and a second temperature adjustment port (302). The first temperature adjustment port separately communicates with the first throttling port and the third throttling port. The heat exchange module is connected between the second throttling port and the second temperature adjustment port. The energy storage module is connected between the fourth throttling port and the second temperature adjustment port. The foregoing solution can implement continuous thermal management on the load at low configuration costs and low operating costs.

## Description

### TECHNICAL FIELD

This application relates to the field of energy, and in particular, to a heat exchange apparatus for energy storage, an energy storage device, and a photovoltaic energy storage system.

### BACKGROUND

Transition of an energy landscape from fossil energy to new energy promotes rapid development of electric automobiles and an energy storage industry. Lithium batteries are commonly used for energy storage of the electric automobiles. However, charge and discharge efficiency, a capacity, safety, and a service life of the lithium battery are greatly affected by a temperature. If the temperature is excessively high or excessively low, or there is a large temperature difference between battery groups, performance of the battery groups is directly affected, resulting in premature failure of a battery system, or even resulting in a series of accidents such as fire and explosion.

To improve the performance and safety of the battery group, a battery pack needs to be configured with a thermal management system. In an existing thermal management system architecture, for example, a liquid-cooling system architecture or an air-cooling system architecture, there is no cold storage design, and an uninterruptible power supply (uninterruptible power supply, UPS) usually needs to be disposed to implement a function of continuous cooling. Consequently, system configuration costs are high, and system operating costs are high during a period of a peak electricity price.

### SUMMARY

This application provides a heat exchange apparatus for energy storage, an energy storage device, and a photovoltaic energy storage system, to reduce operating costs of a thermal management system.

According to a first aspect, this application provides a heat exchange apparatus for energy storage. The heat exchange apparatus for energy storage may include a heat exchange module, an energy storage module, an air conditioning module, and a throttling module. The heat exchange module may exchange heat with a load. The throttling module may include a first throttling port, a second throttling port, a third throttling port, and a fourth throttling port. A first control valve and a second control valve may be disposed inside the throttling module. The first control valve separately communicates with the first throttling port and the second throttling port, and the second control valve separately communicates with the third throttling port and the fourth throttling port. The air conditioning module may include a first temperature adjustment port and a second temperature adjustment port, and the first temperature adjustment port separately communicates with the first throttling port and the third throttling port. The heat exchange module may be connected between the second throttling port and the second temperature adjustment port. The energy storage module may be connected between the fourth throttling port and the second temperature adjustment port.

In the technical solution provided in this application, a refrigerant may sequentially flow in the air conditioning module, the throttling module, and the heat exchange module. The air conditioning module may cool or heat the refrigerant, so that the heat exchange module is cooled or heated. This implements cooling or heating of the load, that is, implements heat exchange with the load, thereby achieving an objective of thermal management on the load. The energy storage module and the heat exchange module are connected in parallel between the air conditioning module and the throttling module. Therefore, when the air conditioning module cools or heats the heat exchange module, the air conditioning module may also cool or heat the energy storage module, so that energy can be stored in the energy storage module. When the air conditioning module is shut down due to a fault, a period of a peak electricity price, or the like, the energy storage module may release the stored energy to cool or heat the heat exchange module, to implement continuous thermal management on the load, thereby reducing configuration costs of the apparatus. The energy storage module may further assist the air conditioning module in cooling or heating the heat exchange module, so that the operating costs of the apparatus can be reduced. In general, the heat exchange apparatus for energy storage provided in this application can implement continuous thermal management on the load at low configuration costs and low operating costs.

In a specific implementable solution, the energy storage module may have a first energy storage port and a second energy storage port. The first energy storage port communicates with the fourth throttling port, and the second energy storage port communicates with the second temperature adjustment port. A heat exchanger for energy storage and an energy storage material may be disposed inside the energy storage module. The first energy storage port communicates with the second energy storage port via the heat exchanger for energy storage. The energy storage material is in contact with the heat exchanger for energy storage. In this way, the energy storage module can be connected between the throttling module and the air conditioning module, so that the energy storage module and the heat exchange module are connected in parallel.

In a specific implementable solution, the heat exchange apparatus for energy storage may further include a first pump body, and the first pump body separately communicates with the first throttling port and the third throttling port. When the air conditioning module is shut down due to a fault, a period of a peak electricity price, or the like, a refrigerant flows sequentially in the throttling module, the heat exchange module, and the energy storage module. The first pump body may increase a flow speed of the refrigerant between the heat exchange module and the energy storage module, to improve efficiency of heat exchange between the heat exchange module and the energy storage module.

In a specific implementable solution, the air conditioning module may include a condenser, and the condenser separately communicates with the first temperature adjustment port and the second temperature adjustment port. The condenser may change the refrigerant from a gas state to a liquid state to implement cooling.

In a specific implementable solution, the air conditioning module may include a compressor, and the compressor is connected between the condenser and the second temperature adjustment port. The compressor may increase a temperature and pressure of the refrigerant, and may improve cyclic flow efficiency of the refrigerant.

In a specific implementable solution, the air conditioning module may include a third control valve, and the third control valve and the compressor are connected in parallel between the condenser and the second temperature adjustment port. Whether the refrigerant flows through the compressor can be implemented by controlling connection and disconnection of the third control valve, so that the compressor can be selected not to run, thereby reducing energy consumption for operating the apparatus.

In a specific implementable solution, the air conditioning module may include a multi-way valve group. The multi-way valve group has a first conversion port, a second conversion port, a third conversion port, and a fourth conversion port, and any two conversion ports may communicate with each other. The first conversion port may communicate with the condenser, the second conversion port and the third conversion port may separately communicate with the compressor, and the fourth conversion port may communicate with the second temperature adjustment port. Whether the refrigerant flows through the compressor can be implemented by controlling connection and disconnection of the multi-way valve group, so that the compressor can be selected not to run, thereby achieving an objective of reducing energy consumption for operating the apparatus.

In a specific implementable solution, the heat exchange module may include a first heat exchange module and a second heat exchange module, and the first heat exchange module exchanges heat with the load via the second heat exchange module. The first heat exchange module exchanges heat with the second heat exchange module, and the second heat exchange module exchanges heat with the load, to implement thermal management on the load.

In a specific implementable solution, the first heat exchange module may include a heat exchanger. The heat exchanger may have a first heat exchange port and a second heat exchange port. The first heat exchange port communicates with the second heat exchange port inside the heat exchanger. The heat exchanger may exchange heat with ambient air. The first heat exchange port may communicate with the second throttling port, and the second heat exchange port may communicate with the second temperature adjustment port. The second heat exchange module may include a first fan, and the first fan is disposed opposite to the heat exchanger. The first fan may enable the air around the heat exchanger to flow to the load. In this way, the heat exchange apparatus for energy storage can be used in an air-cooling scenario, to implement thermal management on the load in an air-cooling manner.

In a specific implementable solution, the first heat exchange module may include a heat exchanger. The heat exchanger may have a first heat exchange port, a second heat exchange port, a third heat exchange port, and a fourth heat exchange port. Inside the heat exchanger, the first heat exchange port communicates with the second heat exchange port, and the third heat exchange port communicates with the fourth heat exchange port. The first heat exchange port may communicate with the second throttling port, and the second heat exchange port may communicate with the second temperature adjustment port. The second heat exchange module may include a cooling plate. The cooling plate may separately communicate with the third heat exchange port and the fourth heat exchange port, and the cooling plate may exchange heat with the load. In this way, the heat exchange apparatus for energy storage can be used in a liquid-cooling scenario, to implement thermal management on the load in a liquid-cooling manner.

According to a second aspect, this application further provides an energy storage device. The energy storage device may include a battery and the heat exchange apparatus for energy storage according to any one of the implementable solutions of the first aspect. The battery is disposed opposite to or connected to a heat exchange module, to exchange heat with the heat exchange module. According to the energy storage device provided in this application, the heat exchange apparatus for energy storage can perform thermal management on the battery, to ensure working stability and use safety of the battery, and performance of the energy storage device is reliable.

According to a third aspect, this application further provides a photovoltaic energy storage system. The photovoltaic energy storage system may include a power generation device, power conversion equipment, and the energy storage device according to the second aspect. The power conversion equipment is connected between the power generation device and the energy storage device, and the power generation device is configured to store generated electric energy into a battery of the energy storage device via the power conversion equipment. The photovoltaic energy storage system provided in this application has high working stability and high use safety.

### BRIEF DESCRIPTION OF DRAWINGS

FIG. 1 is a diagram of a possible structure of a heat exchange apparatus for energy storage according to this application;
FIG. 2 is a diagram of a possible structure of a heat exchange apparatus for energy storage according to this application;
FIG. 3 is a diagram of another possible structure of a heat exchange apparatus for energy storage according to this application;
FIG. 4 is a diagram of another possible structure of a heat exchange apparatus for energy storage according to this application;
FIG. 5 is a diagram of another possible structure of a heat exchange apparatus for energy storage according to this application;
FIG. 6 is a diagram of another possible structure of a heat exchange apparatus for energy storage according to this application;
FIG. 7 is a diagram of another possible structure of a heat exchange apparatus for energy storage according to this application;
FIG. 8 is a diagram of another possible structure of a heat exchange apparatus for energy storage according to this application;
FIG. 9 is a diagram of another possible structure of a heat exchange apparatus for energy storage according to this application;
FIG. 10 is a diagram of another possible structure of a heat exchange apparatus for energy storage according to this application;
FIG. 11 is a diagram of another possible structure of a heat exchange apparatus for energy storage according to this application;
FIG. 12 is a diagram of another possible structure of a heat exchange apparatus for energy storage according to this application; and
FIG. 13 is a diagram of a possible structure of a photovoltaic energy storage system according to this application.

Reference numerals:
100: heat exchange module; 200: energy storage module; 300: air conditioning module; 400: throttling module;
500: load; 600: first pump body; 101: heat exchanger; 102: first fan;
103: cooling plate; 104: second pump body; 201: first energy storage port; 202: second energy storage port;
203: heat exchanger for energy storage; 204: energy storage material; 301: first temperature adjustment port; 302: second temperature adjustment port;
303: condenser; 304: second fan; 305: compressor; 306: third control valve;
307: multi-way valve group; 401: first throttling port; 402: second throttling port; 403: third throttling port;
404: fourth throttling port; 405: first control valve; 406: second control valve; 1011: first heat exchange port;
1012: second heat exchange port; 1013: third heat exchange port; 1014: fourth heat exchange port; 3071: first conversion port;
3072: second conversion port; 3073: third conversion port; 3074: fourth conversion port; 1: energy storage device;
2: power conversion equipment; 3: power generation device.

### DESCRIPTION OF EMBODIMENTS

To make the objectives, technical solutions, and advantages of this application clearer, the following further describes embodiments of this application in detail with reference to the accompanying drawings. However, example implementations may be implemented in a plurality of forms, and should not be construed as being limited to implementations described herein. Identical reference numerals in the accompanying drawings indicate identical or similar structures. Therefore, repeated descriptions thereof are omitted. Expressions of positions and directions in embodiments of this application are described by using the accompanying drawings as an example. However, changes may be also made as required, and all the changes fall within the protection scope of this application. The accompanying drawings in embodiments of this application are merely used to illustrate a relative position relationship and do not represent an actual scale.

Specific details are described in the following descriptions to facilitate understanding of this application. However, embodiments of this application may be implemented in a plurality of manners different from those described herein, and a person skilled in the art may make similar promotion without violating the connotation of embodiments of this application. Therefore, this application is not limited to the specific implementations disclosed below.

For ease of understanding, an application scenario of the heat exchange apparatus for energy storage in this application is first described. The heat exchange apparatus for energy storage provided in embodiments of this application may be used in a plurality of scenarios including battery thermal management, a liquid-cooling system, and an air-cooling system. For example, the heat exchange apparatus for energy storage may be used in an energy storage scenario, used as a component of a thermal management system of an energy storage device, and configured to cool and heat the energy storage device. The energy storage device provided in embodiments of this application may be used in but is not limited to industrial and commercial energy storage scenarios such as small-scale industry and commerce (for example, a small factory), medium-scale industry and commerce, large-scale industry and commerce, a wind/photovoltaic energy storage power station, and a small or medium micro grid (for example, an island), and power station scenarios such as a wind/solar energy storage power station, a grid energy storage power station, and a large microgrid, to store and release electric energy. During actual application, the energy storage device may be represented in a form of energy storage cabinet, energy storage container, or the like. In addition, the heat exchange apparatus for energy storage provided in embodiments of this application may be used in scenarios such as a data center, an in-vehicle network, and a charging network, and is configured to cool and heat a plurality of apparatuses, components, and the like that need thermal management.

In the conventional technology, there is no cold storage design in a thermal management system architecture, and an uninterruptible power supply needs to be disposed to implement a function of continuous cooling. Consequently, system configuration costs are high, and system operating costs are high during a period of a peak electricity price. In view of this, embodiments of this application provide a heat exchange apparatus for energy storage, to reduce the operating costs of the thermal management system.

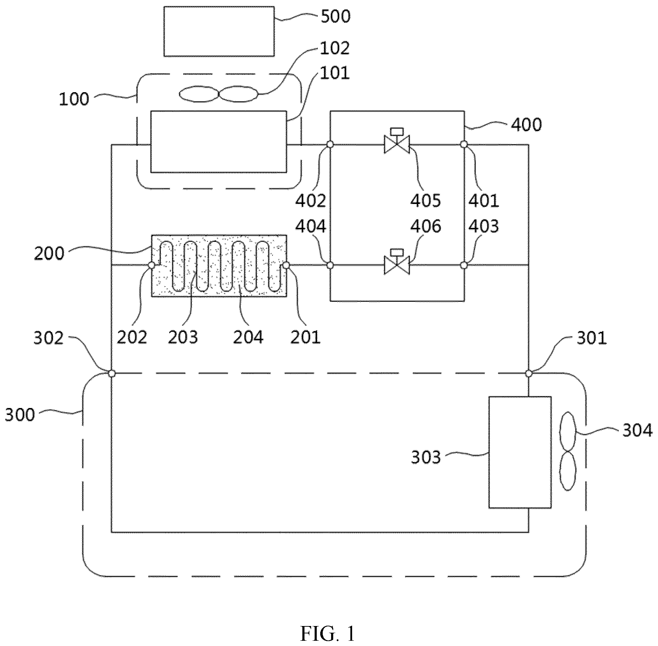

First, FIG. 1 is a diagram of a possible structure of a heat exchange apparatus for energy storage according to this application. As shown in FIG. 1, the heat exchange apparatus for energy storage according to an embodiment of this application may include a heat exchange module 100, an energy storage module 200, an air conditioning module 300, and a throttling module 400. It may be understood that the heat exchange apparatus for energy storage may further include refrigerant pipes disposed inside and outside the modules and configured to connect the modules and components inside the modules. During actual application, the heat exchange module 100 exchanges heat with the load 500. The load 500 herein is a thermal management object, and may be a battery, a battery pack (pack), a data center cabinet, another apparatus or component that needs thermal management, or the like.

During specific implementation, a housing of the throttling module 400 may have a first throttling port 401, a second throttling port 402, a third throttling port 403, and a fourth throttling port 404. A first control valve 405 and a second control valve 406 may be disposed inside the throttling module 400. During specific connection, the first control valve 405 may separately communicate with the first throttling port 401 and the second throttling port 402 through a refrigerant pipe, and the second control valve 406 may separately communicate with the third throttling port 403 and the fourth throttling port 404 through a refrigerant pipe. During specific implementation, the first control valve 405 and the second control valve 406 each may be a throttle valve, a solenoid valve, a ball valve, or the like. The first control valve 405 and the second control valve 406 may be valves of a same type, or may be valves of different types.

The air conditioning module 300 may have a first temperature adjustment port 301 and a second temperature adjustment port 302. The first temperature adjustment port 301 may separately communicate with the first throttling port 401 and the third throttling port 403 through a refrigerant pipe. The heat exchange module 100 may be connected between the second throttling port 402 and the second temperature adjustment port 302 through a refrigerant pipe, and the energy storage module 200 may be connected between the fourth throttling port 404 and the second temperature adjustment port 302. To be specific, the energy storage module 200 and the heat exchange module 100 may be connected in parallel between the second temperature adjustment port 302 and the throttling module 400. In other words, the energy storage module 200 and the heat exchange module 100 may be connected in parallel between the air conditioning module 300 and the throttling module 400.

According to the heat exchange apparatus for energy storage provided in this embodiment of this application, a refrigerant may sequentially flow in the air conditioning module 300, the throttling module 400, and the heat exchange module 100. The air conditioning module 300 may cool or heat the refrigerant, so that the heat exchange module 100 is cooled or heated. This implements cooling or heating of the load 500, that is, implements heat exchange with the load 500 to implement thermal management on the load 500. The energy storage module 200 and the heat exchange module 100 are connected in parallel between the air conditioning module 300 and the throttling module 400. Therefore, when the air conditioning module 300 cools or heats the heat exchange module 100, the air conditioning module 300 may also cool or heat the energy storage module 200, so that energy can be stored in the energy storage module 200. When the air conditioning module 300 is shut down due to a fault, a period of a peak electricity price, or the like, the energy storage module 200 may release the stored energy to cool or heat the heat exchange module 100, to implement continuous thermal management on the load 500, thereby reducing configuration costs of the apparatus. The energy storage module 200 may further assist the air conditioning module 300 in cooling or heating the heat exchange module 100, thereby reducing operating costs of the apparatus. In general, the heat exchange apparatus for energy storage provided in this embodiment of this application can implement continuous thermal management on the load 500 at low configuration costs and low operating costs.

During specific implementation, when the air conditioning module 300 is shut down due to the fault, the period of the peak electricity price, or the like, the refrigerant may sequentially flow in the throttling module 400, the heat exchange module 100, and the energy storage module 200. The energy storage module 200 may release the stored energy to cool or heat the refrigerant, so that the heat exchange module 100 is cooled or heated. This implements continuous thermal management on the load 500.

In a possible implementation, a housing of the energy storage module 200 may have a first energy storage port 201 and a second energy storage port 202. A heat exchanger for energy storage 203 and an energy storage material 204 may be disposed inside the energy storage module 200. The first energy storage port 201 communicates with the second energy storage port 202 inside the energy storage module 200. Specifically, the first energy storage port 201 communicates the second energy storage port 202 via the heat exchanger for energy storage 203. The first energy storage port 201 communicates with the fourth throttling port 404, and the second energy storage port 202 communicates with the second temperature adjustment port 302, so that the energy storage module 200 is connected between the throttling module 400 and the air conditioning module 300. The heat exchange module 100 is also connected between the throttling module 400 and the air conditioning module 300. Therefore, the energy storage module 200 and the heat exchange module 100 are connected in parallel. The energy storage material 204 may be filled inside the energy storage module 200, and the energy storage material 204 is in contact with the heat exchanger for energy storage 203.

During specific implementation, the heat exchanger for energy storage 203 may be an evaporator, or the heat exchanger for energy storage 203 may be a pipe. Specifically, the heat exchanger for energy storage 203 may be a part of a refrigerant pipe. When flowing through the heat exchanger for energy storage 203, the refrigerant exchanges heat with the energy storage material 204. The energy storage material 204 stores energy. For example, the energy storage material 204 may be hydrous salt or paraffin. Cold storage is performed by using a cold storage material. This eliminates a safety risk of a short circuit of an energized component caused by leakage of working medium water during application of conventional cold storage of a water system.

In a possible implementation, the air conditioning module 300 may include a condenser 303. The condenser 303 may be configured to change the refrigerant from a gas state to a liquid state by consuming heat, to implement cooling. The condenser 303 may be disposed inside the air conditioning module 300. During specific connection, the condenser 303 may separately communicate with the first temperature adjustment port 301 and the second temperature adjustment port 302. During specific implementation, the condenser 303 may be equipped with a second fan 304. The second fan 304 may be disposed inside the air conditioning module 300, and the second fan 304 is disposed opposite to the condenser 303 to dissipate heat for the condenser 303.

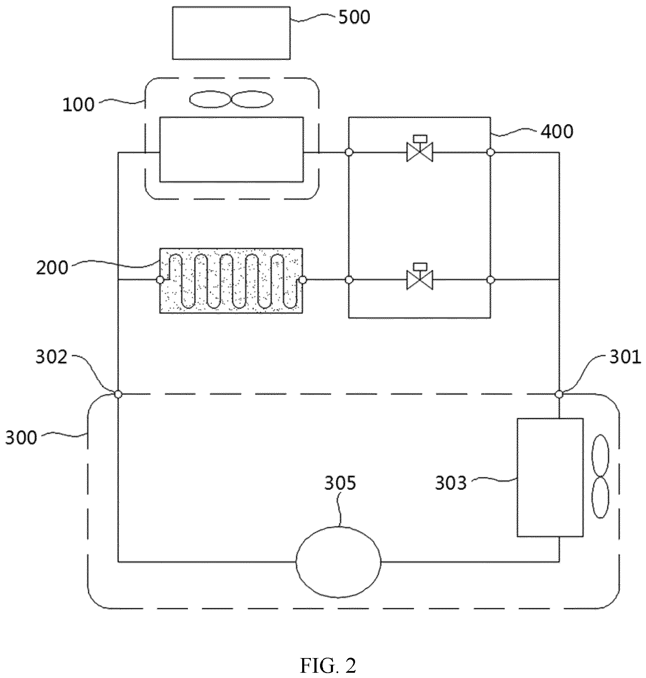

FIG. 2 is a diagram of another possible structure of the heat exchange apparatus for energy storage according to this application. As shown in FIG. 2, during specific implementation, the air conditioning module 300 may further include a compressor 305. The compressor 305 may be configured to increase a temperature and pressure of the refrigerant, to implement cyclic flow of the refrigerant. During specific implementation, the compressor 305 may be disposed inside the air conditioning module 300, and the compressor 305 may be connected between the condenser 303 and the second temperature adjustment port 302. Alternatively, the compressor 305 may be disposed outside a housing of the air conditioning module 300, and the compressor 305 may be connected between the condenser 303 and the heat exchange module 100. In this case, the energy storage module 200 and the heat exchange module 100 are connected in parallel between the compressor 305 and the throttling module 400. The second temperature adjustment port 302 may be a port that is of the compressor 305 and that is connected to the heat exchange module 100.

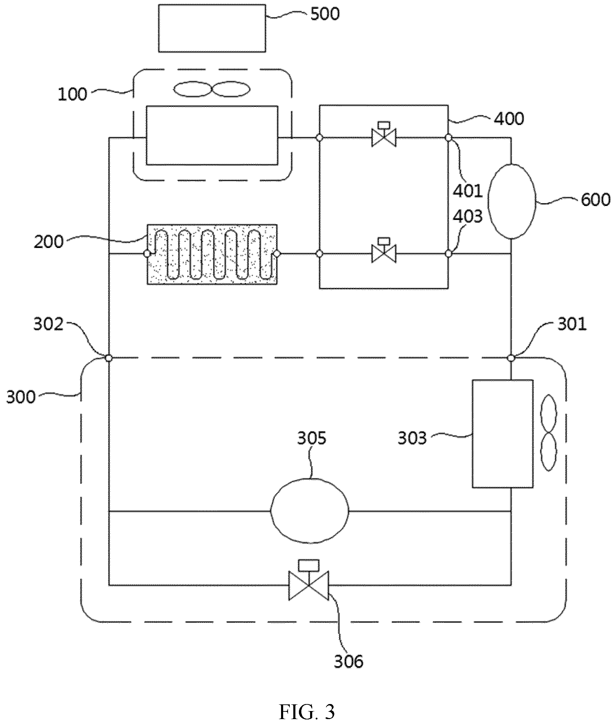

FIG. 3 is a diagram of another possible structure of the heat exchange apparatus for energy storage according to this application. As shown in FIG. 3, the heat exchange apparatus for energy storage according to an embodiment of this application may further include a first pump body 600. During specific connection, the first pump body 600 may separately communicate with the first throttling port 401 and the third throttling port 403. When the air conditioning module 300 is shut down due to a fault, a period of a peak electricity price, or the like, the refrigerant flows sequentially in the throttling module 400, the heat exchange module 100, and the energy storage module 200. The first pump body 600 may increase a flow speed of the refrigerant between the heat exchange module 100 and the energy storage module 200, to improve efficiency of heat exchange between the heat exchange module 100 and the energy storage module 200. In addition, during normal power supply, or when the air conditioning module 300 runs normally, the first pump body 600 may also be activated, to increase the flow speed of the refrigerant and improve heat exchange efficiency of the heat exchange module 100.

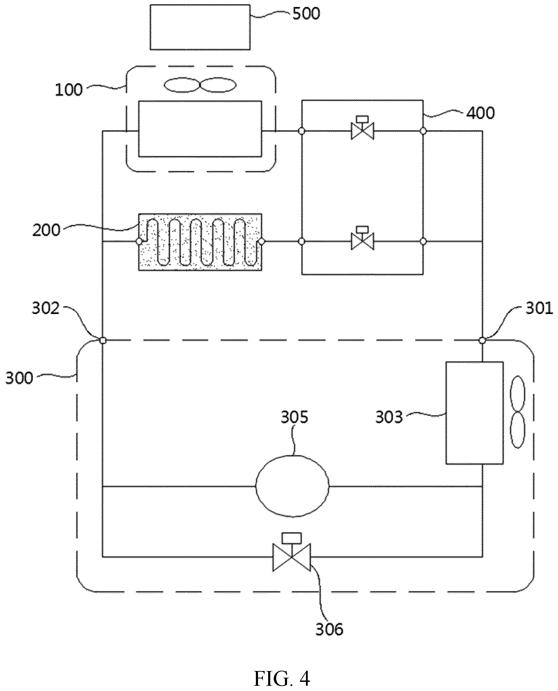

FIG. 4 is a diagram of another possible structure of the heat exchange apparatus for energy storage according to this application. As shown in FIG. 3 and FIG. 4, in a specific possible implementation, the air conditioning module 300 may include a third control valve 306. The third control valve 306 may be disposed inside or outside the housing of the air conditioning module 300. FIG. 3 shows a case in which the third control valve 306 and the first pump body 600 coexist. FIG. 3 and FIG. 4 both show a case in which the third control valve 306 is disposed inside the housing of the air conditioning module 300. The third control valve 306 may be connected in parallel with the compressor 305. Specifically, the third control valve 306 may be connected in parallel with the compressor 305 between the condenser 303 and the second temperature adjustment port 302. The third control valve 306 may be a ball valve, a one-way valve, or the like. During actual application, whether the refrigerant flows through the compressor 305 may be implemented by controlling connection and disconnection of the third control valve 306. In some working conditions, for example, when an ambient temperature is low, the compressor 305 may be selected not to run, and only the condenser 303 is used for cooling, thereby reducing power consumption of the apparatus.

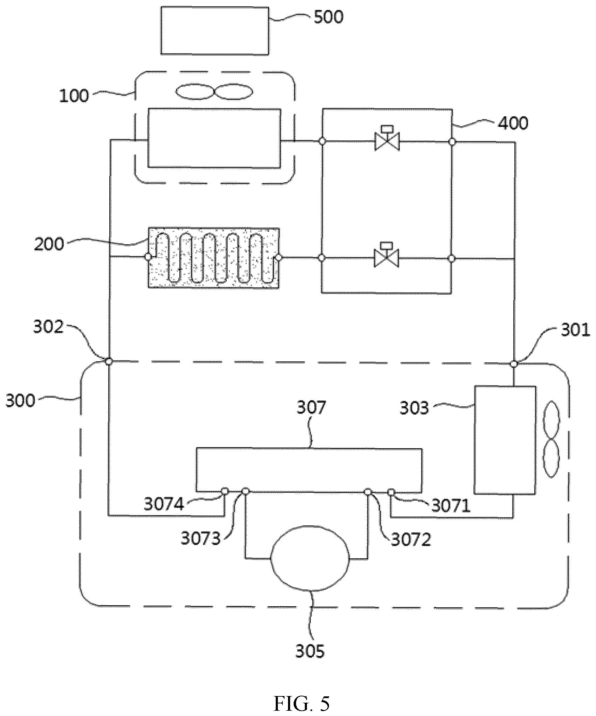

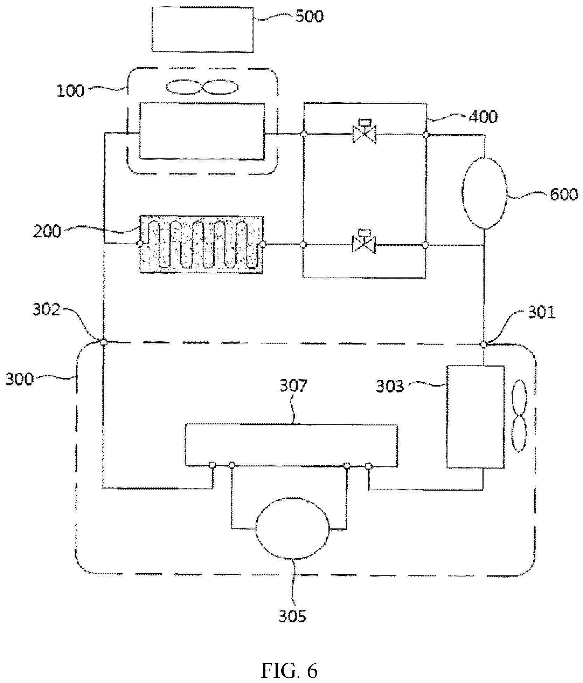

FIG. 5 is a diagram of another possible structure of the heat exchange apparatus for energy storage according to this application. FIG. 6 is a diagram of another possible structure of the heat exchange apparatus for energy storage according to this application. As shown in FIG. 5 and FIG. 6, in another specific possible implementation, the air conditioning module 300 may include a multi-way valve group 307. The multi-way valve group 307 may have a first conversion port 3071, a second conversion port 3072, a third conversion port 3073, and a fourth conversion port 3074. Any two conversion ports may communicate with each other inside the multi-way valve group 307. For example, the first conversion port 3071 may communicate with the second conversion port 3072; the third conversion port 3073 may communicate with the fourth conversion port 3074; the first conversion port 3071 may communicate with the third conversion port 3073; the second conversion port 3072 may communicate with the fourth conversion port 3074; and the first conversion port 3071 may communicate with the fourth conversion port 3074. The multi-way valve group 307 may be disposed inside or outside the housing of the air conditioning module 300. FIG. 5 and FIG. 6 both show a case in which the multi-way valve group 307 is disposed inside the housing of the air conditioning module 300. FIG. 6 shows a case in which the multi-way valve group 307 and the first pump body 600 coexist. During specific connection, the first conversion port 3071 communicates with the condenser 303, the second conversion port 3072 and the third conversion port 3073 separately communicate with the compressor 305, and the fourth conversion port 3074 communicates with the second temperature adjustment port 302. The multi-way valve group 307 includes a four-way valve, a solenoid valve, a ball valve, a one-way valve, and the like.

During specific implementation, whether the refrigerant flows through the compressor 305 may be implemented by controlling connection and disconnection of the multi-way valve group 307. For example, when the first conversion port 3071 communicates with the second conversion port 3072 and the third conversion port 3073 communicates with the fourth conversion port 3074, the refrigerant flows through the compressor 305. When the first conversion port 3071 communicates with the third conversion port 3073 and the second conversion port 3072 communicates with the fourth conversion port 3074, the refrigerant flows through the compressor 305. When the first conversion port 3071 communicates with the fourth conversion port 3074, the refrigerant does not flow through the compressor 305. During actual application, whether the refrigerant flows through the compressor 305 may be selected based on actual requirements of a plurality of working conditions, that is, whether the compressor 305 is connected to the apparatus is selected.

During actual application and normal power supply, based on the working condition, the first pump body 600, the compressor 305, the third control valve 306, and the multi-way valve group 307 may be activated to implement heat exchange with the load 500, thereby achieving an objective of thermal management on the load 500 and implementing energy storage by the energy storage module 200. In a power-off period or during a period of a peak electricity price, based on the working condition, power may be supplied to the first pump body 600 and the second fan 304 by an uninterruptible power supply. The energy storage module 200 exchanges heat with the heat exchange module 100 to exchange heat with the load 500. In this way, the objective of continuous thermal management on the load 500 is achieved. This may not only reduce a power distribution capacity of the front-end uninterruptible power supply, reduce design redundancy, reduce a capital expenditure (capital expenditure, CAPEX), implement continuous thermal management at low costs, but also may improve operating energy efficiency of the apparatus.

The heat exchange apparatus for energy storage provided in embodiments of this application can meet the requirements of the plurality of working conditions, and can be flexibly used during actual application. For example, when an ambient temperature is low and during a period of a low electricity price, the first pump body 600, the compressor 305, the third control valve 306, and the multi-way valve group 307 may be activated to implement energy storage by the energy storage module 200. When an ambient temperature is high and during a period of a peak electricity price, the compressor 305 may be deactivated, and the energy storage module 200 is activated to perform cold discharge. This can implement off-peak power consumption and reduce operating costs of the apparatus. In addition, when the ambient temperature is high and during the period of the peak electricity price, the energy storage module 200 and the air conditioning module 300 may be activated at the same time to implement peak-clipping cooling for the load 500. In this way, the energy storage module 200 is disposed to reduce a designed system capacity of the compressor 305, reduce operating energy consumption of the compressor 305, and lower power distribution peak power of the apparatus, thereby improving grid usage efficiency.

The heat exchange apparatus for energy storage provided in embodiments of this application may be used in a plurality of scenarios such as an air-cooling scenario and a liquid-cooling scenario. During actual application, the heat exchange module 100 may include a first heat exchange module and a second heat exchange module. The air conditioning module 300 and the energy storage module 200 may cool or heat the first heat exchange module. The first heat exchange module exchanges heat with the load 500 via the second heat exchange module, to implement thermal management on the load 500. During specific implementation, the first heat exchange module may be disposed inside a housing of the heat exchange module 100. The second heat exchange module may be disposed inside or outside the housing of the heat exchange module 100. The following describes a possible implementation of the heat exchange module 100 by using two application scenarios as examples.

FIG. 1 to FIG. 6 show examples in which the heat exchange apparatus for energy storage according to an embodiment of this application is used in the air-cooling scenario. For example, in an air-cooling scenario of a data center, the first heat exchange module may include a heat exchanger 101. The heat exchanger 101 may have a first heat exchange port 1011 and a second heat exchange port 1012. The first heat exchange port 1011 and the second heat exchange port 1012 communicate with each other inside the heat exchanger 101. During specific connection, the first heat exchange port 1011 may communicate with the second throttling port 402, and the second heat exchange port 1012 may communicate with the second temperature adjustment port 302, to implement communication between the heat exchanger 101 and the air conditioning module 300. The heat exchanger 101 may exchange heat with ambient air, to implement heat exchange with the load 500 by using air as a medium, thereby achieving the objective of thermal management on the load 500. Specifically, the heat exchanger 101 may be disposed inside the first heat exchange module or outside a housing of the first heat exchange module, and the heat exchanger 101 may be an evaporator or the like.

During specific implementation, the second heat exchange module may include a first fan 102. The first fan 102 may be disposed opposite to the heat exchanger 101. During actual application, the first fan 102 may enable air around the heat exchanger 101 to flow to the load 500, to implement heat exchange with the load 500. Herein, opposite disposing may be: At least a part of the first fan 102 is disposed corresponding to the heat exchanger 101, and for example, the entire first fan 102 is disposed directly opposite to the heat exchanger 101; or a part of the first fan 102 is disposed corresponding to the heat exchanger 101. This is not limited in this application, provided that the first fan 102 can enable the air around the heat exchanger 101 to flow to the load 500. During specific implementation, the first fan 102 may be disposed inside the heat exchange module 100. In this case, the housing of the heat exchange module 100 is provided with an air outlet vent.

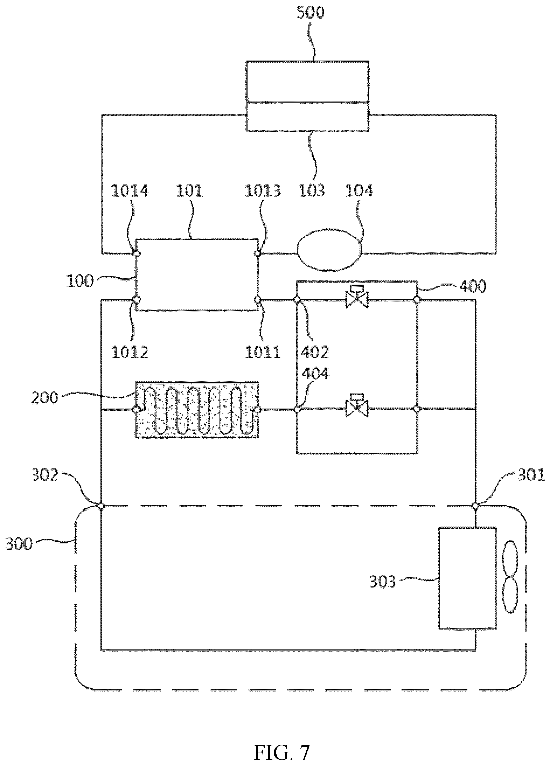

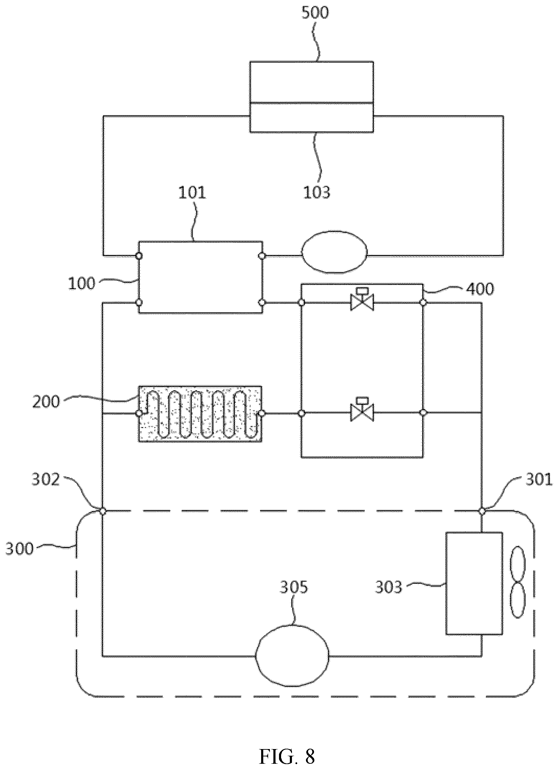

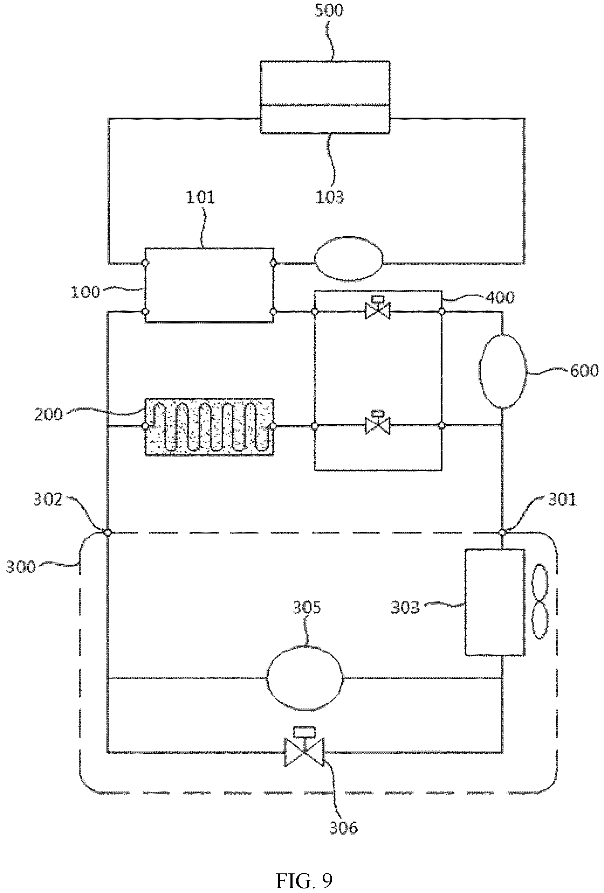

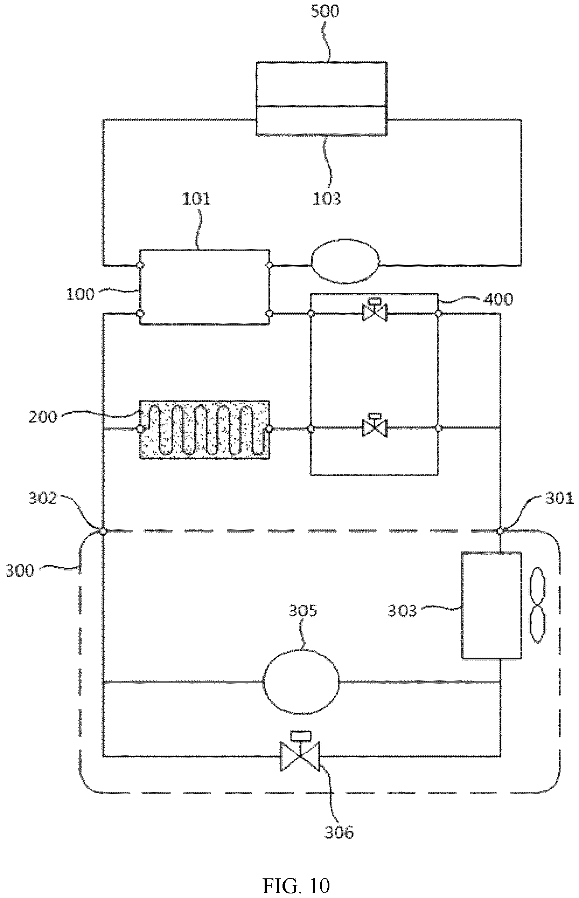

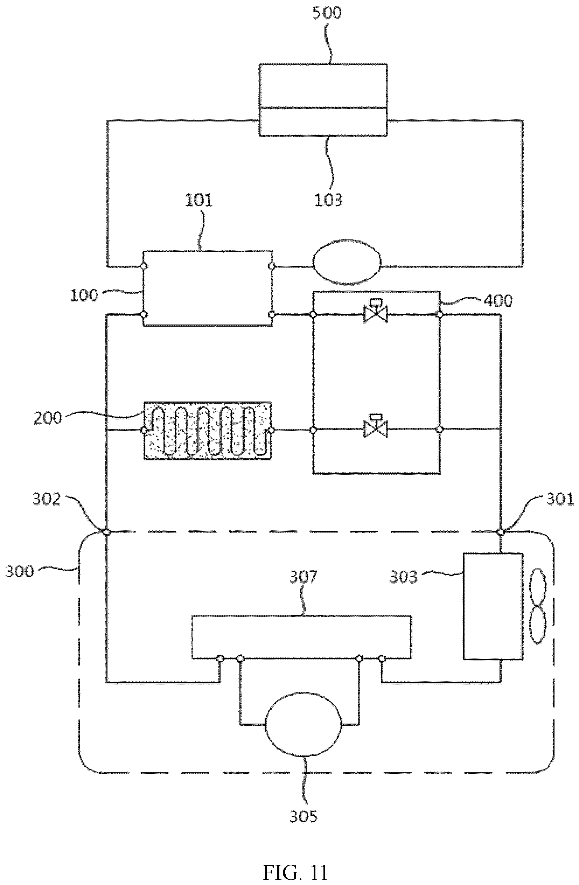

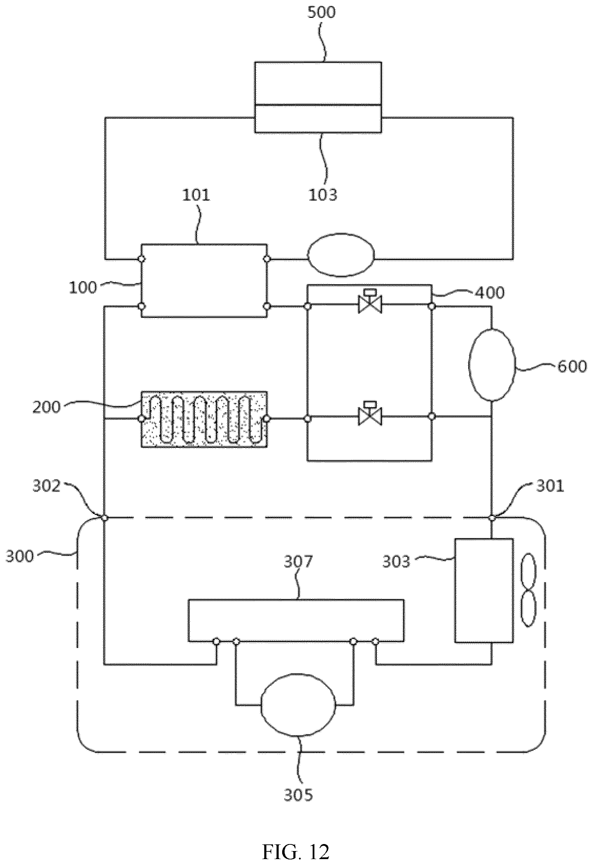

FIG. 7 to FIG. 12 show examples in which the heat exchange apparatus for energy storage according to an embodiment of this application is used in the liquid-cooling scenario. For example, in an energy storage liquid-cooling scenario, the first heat exchange module may include a heat exchanger 101. The heat exchanger 101 may have a first heat exchange port 1011, a second heat exchange port 1012, a third heat exchange port 1013, and a fourth heat exchange port 1014. The first heat exchange port 1011 and the second heat exchange port 1012 communicate with each other inside the heat exchanger 101, and the third heat exchange port 1013 and the fourth heat exchange port 1014 communicate with each other inside the heat exchanger 101. During specific connection, the first heat exchange port 1011 may communicate with the second throttling port 402, and the second heat exchange port 1012 may communicate with the second temperature adjustment port 302, to implement communication between the heat exchanger 101 and the air conditioning module 300. Specifically, the heat exchanger 101 may be a plate heat exchanger 101.

During specific implementation, the second heat exchange module may include a cooling plate 103. The cooling plate 103 may separately communicate with the third heat exchange port 1013 and the fourth heat exchange port 1014, to communicate with the heat exchanger 101. The cooling plate 103 may implement heat exchange with the load 500. Specifically, the cooling plate 103 may be in direct contact with the load 500 to implement heat exchange, or the cooling plate 103 may be connected to the load 500 by using a thermally conductive adhesive or the like to implement heat exchange, or the cooling plate 103 may be replaced with another type of heat exchanger 101, for example, a submerged heat exchanger 101. During actual application, for example, the cooling plate 103 may be submerged in thermally conductive liquid inside the load 500, or both the cooling plate 103 and the load 500 may be submerged in thermally conductive liquid, to implement heat exchange. During actual disposing, a cavity or a flow channel may be disposed inside the cooling plate 103 for coolant to flow. The coolant and the refrigerant perform heat exchange via the heat exchanger 101. The coolant flows through the cavity or the flow channel to implement heat exchange with the cooling plate 103. In this way, heat exchange with the load 500 is implemented, and the objective of thermal management on the load 500 is achieved. During specific implementation, a second pump body 104 may be connected between the cooling plate 103 and the heat exchanger 101, to increase a flow speed of the coolant, thereby improving efficiency of heat exchange between the cooling plate 103 and the load 500.

When the heat exchange apparatus for energy storage provided in embodiments of this application is used in the liquid-cooling scenario, for a disposing status of other modules except the heat exchange module 100, refer to a disposing status obtained when the heat exchange apparatus for energy storage is used in the air-cooling scenario. The disposing status may be completely consistent with the disposing status obtained when the heat exchange apparatus for energy storage is used in the air-cooling scenario. Alternatively, reference may be made only to the components and connections in the air-cooling scenario, and adaptive adjustment may be performed on other parameters. In this case, complete consistency is not required.

Embodiments of this application further provide an energy storage device. The energy storage device may include at least one load 500 and the foregoing heat exchange apparatus for energy storage. The load 500 may be a battery. The battery is disposed opposite to a heat exchange module 100, or the battery is connected to a heat exchange module 100, to implement heat exchange between the battery and the heat exchange module 100.

During specific implementation, the energy storage device may include a cabinet body. In this case, the energy storage device may be referred to as an energy storage cabinet. The battery is disposed inside the cabinet body. For reference, an air conditioning module 300 of the heat exchange apparatus for energy storage may be disposed outside the cabinet body, and other modules of the heat exchange apparatus for energy storage may be disposed inside the cabinet body. During actual application, other than a form of cabinet body, a container may alternatively be used. In this case, the energy storage device may be referred to as an energy storage container.

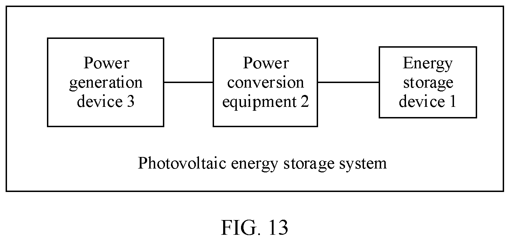

The energy storage device provided in the foregoing embodiments of this application may be used in various energy storage scenarios. FIG. 13 is a diagram of a possible structure of a photovoltaic energy storage system according to this application. As shown in FIG. 13, embodiments of this application further provide the photovoltaic energy storage system. The photovoltaic energy storage system may include power conversion equipment 2, a power generation device 3, and the foregoing energy storage device 1. The power conversion equipment 2 is connected between the power generation device 3 and the energy storage device 1. During actual application, the power generation device 3 stores generated electric energy into a battery of the energy storage device 1 via the power conversion equipment 2. The energy storage device 1 provided in the foregoing embodiment is used in the photovoltaic energy storage system, so that operating safety of the photovoltaic energy storage system can be effectively improved.

In this application, at least one means one or more, and a plurality of means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numerals in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A heat exchange apparatus for energy storage, comprising a heat exchange module, an energy storage module, an air conditioning module, and a throttling module, wherein the heat exchange module is configured to exchange heat with a load;
the throttling module comprises a first throttling port, a second throttling port, a third throttling port, and a fourth throttling port, a first control valve and a second control valve are disposed inside the throttling module, the first control valve separately communicates with the first throttling port and the second throttling port, and the second control valve separately communicates with the third throttling port and the fourth throttling port;
the air conditioning module comprises a first temperature adjustment port and a second temperature adjustment port, and the first temperature adjustment port separately communicates with the first throttling port and the third throttling port;
the heat exchange module is connected between the second throttling port and the second temperature adjustment port; and
the energy storage module is connected between the fourth throttling port and the second temperature adjustment port.

2. The heat exchange apparatus for energy storage according to claim 1, wherein the energy storage module has a first energy storage port and a second energy storage port;
the first energy storage port communicates with the fourth throttling port, and the second energy storage port communicates with the second temperature adjustment port; and
a heat exchanger for energy storage and an energy storage material are disposed inside the energy storage module;
the first energy storage port communicates with the second energy storage port via the heat exchanger for energy storage; and the energy storage material is in contact with the heat exchanger for energy storage.

3. The heat exchange apparatus for energy storage according to claim 1 or 2, further comprising a first pump body, wherein the first pump body separately communicates with the first throttling port and the third throttling port.

4. The heat exchange apparatus for energy storage according to any one of claims 1 to 3, wherein the air conditioning module comprises a condenser, and the condenser separately communicates with the first temperature adjustment port and the second temperature adjustment port.

5. The heat exchange apparatus for energy storage according to claim 4, wherein the air conditioning module comprises a compressor, and the compressor is connected between the condenser and the second temperature adjustment port.

6. The heat exchange apparatus for energy storage according to claim 5, wherein the air conditioning module comprises a third control valve, and the third control valve and the compressor are connected in parallel between the condenser and the second temperature adjustment port.

7. The heat exchange apparatus for energy storage according to claim 5, wherein the air conditioning module comprises a multi-way valve group, the multi-way valve group has a first conversion port, a second conversion port, a third conversion port, and a fourth conversion port, and any two conversion ports may communicate with each other; and
the first conversion port communicates with the condenser, the second conversion port and the third conversion port separately communicate with the compressor, and the fourth conversion port communicates with the second temperature adjustment port.

8. The heat exchange apparatus for energy storage according to any one of claims 1 to 7, wherein the heat exchange module comprises a first heat exchange module and a second heat exchange module, and the first heat exchange module exchanges heat with the load via the second heat exchange module.

9. The heat exchange apparatus for energy storage according to claim 8, wherein the first heat exchange module comprises a heat exchanger, the heat exchanger has a first heat exchange port and a second heat exchange port, and the heat exchanger is configured to exchange heat with ambient air;
the first heat exchange port communicates with the second throttling port, and the second heat exchange port communicates with the second temperature adjustment port; and
the second heat exchange module comprises a first fan, and the first fan is disposed opposite to the heat exchanger.

10. The heat exchange apparatus for energy storage according to claim 8, wherein the first heat exchange module comprises a heat exchanger, and the heat exchanger has a first heat exchange port, a second heat exchange port, a third heat exchange port, and a fourth heat exchange port;
the first heat exchange port communicates with the second throttling port, and the second heat exchange port communicates with the second temperature adjustment port; and
the second heat exchange module comprises a cooling plate, the cooling plate separately communicates with the third heat exchange port and the fourth heat exchange port, and the cooling plate is configured to exchange heat with the load.

11. An energy storage device, comprising a battery and the heat exchange apparatus for energy storage according to any one of claims 1 to 10, wherein
the battery is disposed opposite to or connected to a heat exchange module, to exchange heat with the heat exchange module.

12. A photovoltaic energy storage system, comprising a power generation device, power conversion equipment, and the energy storage device according to claim 11, wherein the power conversion equipment is connected between the power generation device and the energy storage device, and the power generation device is configured to store generated electric energy into a battery of the energy storage device via the power conversion equipment.
